# EUROPEAN PATENT APPLICATION

(11) **EP 3 388 300 A1**
(43) Date of publication of application: **17.10.2018**
(21) Application number: 17760137.4
(22) Date of filing: 02.03.2017
(51) Int. Cl.: B60W 30/02, B60T 8/1755, B60W 10/04, B60W 10/06, B60W 10/18, B60W 10/188, B60W 40/11, F02D 9/02, F02D 29/02, F02D 45/00

(54) **FRONT WHEEL LIFT SUPPRESSION DEVICE AND VEHICLE HAVING FRONT WHEEL LIFT SUPPRESSION DEVICE MOUNTED THEREON**

(30) Priority: 03.03.2016 JP 2016040861
(71) Applicant: Yamaha Hatsudoki Kabushiki Kaisha, Iwata-shi, Shizuoka 438-8501 (JP)
(72) Inventor: SEKI, Yoshimichi, Iwata-shi Shizuoka 438-8501 (JP); MIZUTANI, Takaaki, Iwata-shi Shizuoka 438-8501 (JP); FUKUDA, Tadashi, Iwata-shi Shizuoka 438-8501 (JP); KASAI, Satoshi, Iwata-shi Shizuoka 438-8501 (JP); HIGUCHI, Shoma, Iwata-shi Shizuoka 438-8501 (JP)
(74) Representative: Stöckeler, Ferdinand
(86) International application number: PCT/JP2017/008308
(87) International publication number: WO 2017/150674

(57) **Abstract**

A front-wheel lift reduction device 50, in a vehicle including a front wheel and a rear wheel, for reducing a lift of the front wheel includes: a front-wheel lift detection unit 51 for detecting a lift of the front wheel; a target pressure-increase decision unit 52 for deciding on a target pressure-increase for the rear wheel based on the detection result from the front-wheel lift detection unit; a brake pressure command unit 53 for sending, to a brake pressure control device, as a command, the target pressure-increase decided on by the target pressure-increase decision unit to apply a brake to the rear wheel during at least an initial sub-period of the front-wheel lift period; an engine output decision unit 54 for setting a target engine output based on the detection result from the front-wheel lift detection unit; and an engine output command unit 55 for sending, to an engine control device, as a command, the target engine output decided on by the engine output decision unit during the lift period.

## Description

### TECHNICAL FIELD

The present invention relates to a front-wheel lift reduction device in a vehicle including a front wheel and a rear wheel for reducing a lift of the front wheel, and a vehicle mounted with this front-wheel lift reduction device.

### BACKGROUND ART

In a motorcycle, the front wheel may be lifted, for example during acceleration. To reduce such a lift of the front wheel, for example, a device is known that reduces engine torque during a lift of the front wheel to cause the front wheel to land. Typically, intake amount, injection quantity or ignition timing, for example, is adjusted to reduce engine torque.

JP 2010-229912 A (Patent Document 1) proposes an engine output control device that uses an angular velocity sensor to sense lift of the front wheel to enable downward controlling of the engine output based on the degree of the front-wheel lift.

### PRIOR ART DOCUMENTS

### PATENT DOCUMENTS

Patent Document 1: JP 2010-229912 A

### SUMMARY OF THE INVENTION

### PROBLEMS TO BE SOLVED BY THE INVENTION

However, if engine torque is reduced during acceleration to reduce the lift of the front wheel, engine torque must be returned back after the front wheel lands. As such, acceleration and deceleration caused by hunting in engine torque may be repeated. Further, in a vehicle where the front wheel may be lifted, such as a motorcycle, such hunting may be significant.

An object of the present invention is to provide a front-wheel lift reduction device that uses both the control of engine output and the control of the rear-wheel brake to reduce hunting caused by the control of engine output, and a vehicle mounted with this front-wheel lift reduction device.

### MEANS FOR SOLVING THE PROBLEMS AND EFFECTS OF THE INVENTION

### (Arrangement 1)

A front-wheel lift reduction device according to an embodiment of the present invention is a front-wheel lift reduction device, in a vehicle including a front wheel, a rear wheel, an engine for driving the rear wheel and a rear-wheel brake for applying braking power to the rear wheel, for reducing a lift of the front wheel, the device including: a front-wheel lift detection unit configured to detect a lift of the front wheel; a target pressure-increase decision unit configured to decide on a target pressure-increase based on a detection result from the front-wheel lift detection unit to apply braking power to the rear wheel for at least an initial sub-period of a front-wheel lift period during which the lift of the front wheel is detected, the target pressure-increase serving as a target for the rear-wheel brake; a brake pressure command unit configured to issue a command to a brake pressure control device using, as a command value, the target pressure-increase decided on by the target pressure-increase decision unit; an engine output decision unit configured to set a target engine output based on the detection result from the front-wheel lift detection unit, the target engine output serving as a target for an output of the engine; and an engine output command unit configured to issue a command to an engine control device using, as a command value, the target engine output decided on by the engine output decision unit.

Arrangement 1 provides a front-wheel lift reduction device that uses both the control of engine output and the control of the rear-wheel brake to reduce hunting caused by the control of engine output. That is, it is an arrangement that uses both the control of engine output and the control of the rear-wheel brake to reduce a lift of the front wheel, where the rear-wheel brake is controlled during an initial sub-period of the front-wheel lift period. That is, the front-wheel lift reduction device is an arrangement in which the engine output is adjusted based on the result of the detection by the front-wheel lift detection unit in at least a sub-period of the front-wheel lift period, in which a lift of the front wheel is detected by the front-wheel lift detection unit, and braking power is applied to the rear wheel based on the result of the detection by the front-wheel lift detection unit for at least an initial sub-period of the front-wheel lift period.

In Arrangement 1, engine output (torque-down) is adjusted and the rear-wheel brake is applied during at least an initial sub-period of the front-wheel lift period in order to address the situation by applying the rear-wheel brake directly after the front wheel is lifted (i.e. initial sub-period of the front-wheel lift period), thereby suitably reducing the front-wheel lift. Further, since initial reduction of the front-wheel lift is accomplished by applying the rear-wheel brake, the amount of engine torque-down may be reduced compared with conventional arrangements. Thus, hunting caused by the repetition of engine torque-down and torque return may be reduced. Further, since the rear-wheel brake is applied only during at least an initial sub-period of the front-wheel lift period, the period during which the brake is applied can be reduced.

"Front-wheel lift period" is a period during which the front-wheel lift detection unit is continuously detecting lift of the front wheel. "Initial sub-period of the front-wheel lift period" is an initial period of the "front-wheel lift period" that is between the time point at which the front-wheel lift detection unit detects the front wheel being lifted for the first time as opposed to the front wheel not being lifted, and a time point preceding the end point of the front-wheel lift period, and may be in the range of 1 to 80 % of the entire front-wheel lift period, for example.

The brake pressure command unit issues a command to apply the rear-wheel brake during at least an initial sub-period of the front-wheel lift period. "At least an initial sub-period of the front-wheel lift period" as used herein is shorter than the entire front-wheel lift period, and may be in the range of 1 to 80 % of the entire front-wheel lift period. "At least a sub-period" may be equal to or shorter than the "initial sub-period of the front-wheel lift period". "At least an initial sub-period of the front-wheel lift period" may or may not include a period directly after the front wheel being lifted is detected for the first time as opposed to the front wheel being not lifted.

The time point at which a command is issued by the brake pressure command unit and the time point at which a command is issued by the engine output command unit may be the same or different. Even if these commands are issued at the same time, the rear-wheel brake application occurs earlier than the engine torque-down.

The engine output decision unit decides on the target engine output (engine torque amount). For example, it may be configured to reduce engine torque for the entire front-wheel lift period. Alternatively, it may be configured to reduce engine torque for an arbitrary sub-period of the front-wheel lift period. The target engine output may be, for example, a target engine torque amount of 0 to 99, where the engine torque amount as measured when the front-wheel being lifted is detected is represented as 100. Alternatively, a period for reducing engine torque may be provided after the rear-wheel brake application period. The rear-wheel brake application period and the period where engine torque is reduced may completely overlap or partially overlap.

### (Arrangement 2)

According to an embodiment of the above-described invention, the front-wheel lift reduction device further includes: a heat estimation unit configured to estimate heat of the rear-wheel brake,
wherein, if a heat estimate of the rear-wheel brake estimated by the heat estimation unit is equal to or less than a threshold (Th1), the target pressure-increase decision unit decides on the target pressure-increase, and the brake pressure command unit issues a command to the brake pressure control device using the decided-on target pressure-increase as a command value. In this arrangement, the front-wheel lift reduction by means of the rear-wheel brake occurs if the heat of the rear-wheel brake produced as the rear-wheel brake mechanism heats up is equal to or less than a threshold (Th1).

On the other hand, if the heat estimate obtained by the heat estimation unit exceeds the threshold (Th1), the target pressure-increase is not decided on, and no command is issued to the brake pressure control device using the target pressure-increase as a command value. In this case, the engine output decision unit sets the target engine output and the engine output command unit issues a command to the engine control device using the target engine output as a command value. In this case, the rear-wheel brake is not applied, and front-wheel lift reduction is achieved by means of engine torque-down. The front-wheel lift reduction by means of the rear-wheel brake is not performed when the heat of the rear-wheel brake exceeds a threshold due to the heating of the rear-wheel brake mechanism.

The estimation of the heat of the rear-wheel brake may be based on a temperature sensor, such as a thermocouple, or the operation condition of the rear-wheel brake, for example.

### (Arrangement 3)

According to an embodiment of the above-described invention, the front-wheel lift detection unit includes:
a wheel velocity difference determination unit configured to determine whether or not a wheel velocity difference between a front wheel velocity (Vf) and a rear wheel velocity (Vr), (Vd=Vr-Vf), is equal to or more than a threshold (Th2); and
a lift determination time determination unit configured, if the wheel velocity difference determination unit has determined that the wheel velocity difference is equal to or more than the threshold (Vd≥Th2), to determine whether or not a lift determination time (CT) during which the lift of the front wheel is detected is equal to or less than a threshold (Th3) to determine whether the initial sub-period of the front-wheel lift period,
wherein, if the lift determination time determination unit determines that the lift determination time is equal to or less than the threshold (CT≤Th3) and if the heat estimate obtained by the heat estimation unit is equal to or less than the threshold (Th1), then, the target pressure-increase decision unit decides on the target pressure-increase acting during at least partly the initial sub-period of the front-wheel lift period, and the brake pressure command unit issues a command to the brake pressure control device using, as a command value, the target pressure-increase acting during at least partly the initial sub-period of the front-wheel lift period, and
the engine output decision unit sets the target engine output, and the engine output command unit issues a command to the engine control device using the target engine output as a command value.

### (Arrangement 4)

According to an embodiment of the above-described invention, the front-wheel lift detection unit includes:
a lift sign determination unit configured to determine whether there is a lift sign for the front wheel,
wherein, if the lift sign determination unit determines that there is a lift sign for the front wheel and if the heat estimate obtained by the heat estimation unit is equal to or less than the threshold (Th1), then, the target pressure-increase decision unit decides on a target pressure-increase depending on the lift sign for the front wheel, and the brake pressure command unit issues a command to the brake pressure control device using, as a command value, the target pressure-increase depending on the lift sign for the front wheel,
the engine output decision unit sets the target engine output depending on the lift sign for the front wheel, and the engine output command unit issues a command to the engine control device using, as a command value, the target engine output depending on the lift sign for the front wheel.

In Arrangement 4, the front-wheel lift detection unit determines whether there is a lift sign for the front wheel. By predicting in advance that the front wheel will be lifted and performing both the rear-wheel brake application and engine torque-down before lift occurs or directly after lift has occurred, the front wheel will be prevented from being lifted or, if the front wheel is lifted, the lift will be quickly removed.

The front-wheel lift detection unit may include, for example, a front-wheel lift sign estimation unit for estimating the lift sign for the front wheel based on throttle opening, engine rotation number, or vehicle-body velocity, or may receive data about a lift sign for the front wheel calculated by another device and use it.

### (Arrangement 5)

According to an embodiment, the front-wheel lift detection unit includes:
a lift velocity determination unit configured to determine whether or not a front-wheel lift velocity (Vfw) is equal to or more than the threshold (Th4) if the lift determination time determination unit has determined that the lift determination time is more than the threshold (CT≤Th3),
wherein, if the lift velocity determination unit determines that the front-wheel lift velocity is equal to or more than a threshold (Vfw≥Th4) and if the heat estimate obtained by the heat estimation unit is equal to or less than the threshold (Th1), then, the target pressure-increase decision unit decides on the target pressure-increase depending on the front-wheel lift velocity, and the brake pressure command unit issues a command to the brake pressure control device using, as a command value, the target pressure-increase depending on the front-wheel lift velocity, and
the engine output decision unit sets the target engine output depending on the front-wheel lift velocity, and the engine output command unit issues a command to the engine control device using, as a command value, the target engine output depending on the front-wheel lift velocity.

Arrangement 5 will reduce a front-wheel lift by applying the rear-wheel brake when there is a front-wheel lift velocity that is difficult to address using only engine torque-down, for example.

The front-wheel lift velocity (Vfw) may be, for example, calculated based on the amount of change in wheel velocity difference (ΔVd) or obtained by an inertia measurement device.

### (Arrangement 6)

According to an embodiment, the front-wheel lift detection unit includes:
a first lift angle determination unit configured to determine whether or not a front-wheel lift angle (Afw) is equal to or more than a threshold (Th5) if the lift velocity determination unit has determined that the front-wheel lift velocity is less than the threshold (Vfw≥Th4),
wherein, if the first lift angle determination unit determines that the front-wheel lift angle is equal to or more than the threshold (Afw≥Th5) and the heat estimate obtained by the heat estimation unit is equal to or less than the threshold (Th1), then, the target pressure-increase decision unit decides on the target pressure-increase depending on the front-wheel lift angle, and the brake pressure command unit issues a command to the brake pressure control device using, as a command value, the target pressure-increase depending on the front-wheel lift angle, and
the engine output decision unit sets the target engine output depending on the front-wheel lift angle, and the engine output command unit issues a command to the engine control device using, as a command value, the target engine output depending on the front-wheel lift angle.

Arrangement 6 will reduce a lift of the front wheel by applying the rear-wheel brake when there is a front-wheel lift angle (front-wheel lift height) for which a return is difficult using only engine torque-down, for example.

The front-wheel lift angle (Afw) may be obtained by an inertia measurement device, for example.

### (Arrangement 7)

According to an embodiment, the front-wheel lift detection unit includes:
a second lift angle determination unit configured to determine whether or not the front-wheel lift angle (Afw) is equal to or more than a threshold (Th5) if the lift determination time determination unit has determined that the lift determination time is more than the threshold (CT≤Th3),
wherein, if the second lift angle determination unit determines that the front-wheel lift angle is equal to or more than the threshold (Afw≥Th5) and if the heat estimate obtained by the heat estimation unit is equal to or less than the threshold (Th1), then, the target pressure-increase decision unit decides on the target pressure-increase depending on the front-wheel lift angle, and the brake pressure command unit issues a command to the brake pressure control device using, as a command value, the target pressure-increase depending on the front-wheel lift angle, and
the engine output decision unit sets the target engine output depending on the front-wheel lift angle, and the engine output command unit issues a command to the engine control device using, as a command value, the target engine output depending on the front-wheel lift angle.

### (Arrangement 8)

The front-wheel lift detection unit may further include:
a second lift velocity determination unit configured to determine whether or not the front-wheel lift velocity (Vfw) is equal to or more than a threshold (Th4) if the second lift angle determination unit has determined that the front-wheel lift angle is less than the threshold (Afw≥Th5),
wherein, if the second lift velocity determination unit determines that the front-wheel lift velocity is equal to or more than a threshold (Vfw≥Th4) and if the heat estimate obtained by the heat estimation unit is equal to or less than the threshold (Th1), then, the target pressure-increase decision unit may decide on the target pressure-increase depending on the front-wheel lift velocity, and the brake pressure command unit may issue a command to the brake pressure control device using, as a command value, the target pressure-increase depending on the front-wheel lift velocity, and
the engine output decision unit may set the target engine output depending on the front-wheel lift velocity, and the engine output command unit may issue a command to the engine control device using, as a command value, the target engine output depending on the front-wheel lift velocity.

### (Arrangement 9)

An embodiment of the above-described invention further includes:
a throttle opening determination unit configured to determine whether or not a throttle opening (SO) resulting from a rider operation is equal to or more than a threshold (Th6) if the front-wheel lift detection unit has detected a lift of the front wheel (more specifically, if the wheel velocity difference determination unit has determined that the wheel velocity difference is equal to or more than the threshold (Vd≥Th3)),
wherein, if the throttle opening determination unit determines that the throttle opening is equal to or more than the threshold (SO≥Th6), the target pressure-increase decision unit decides on the target pressure-increase depending on the throttle opening, and the brake pressure command unit issues a command to the brake pressure control device using, as a command value, the target pressure-increase depending on the throttle opening, and
the engine output decision unit sets the target engine output depending on the throttle opening, and the engine output command unit issues a command to the engine control device using, as a command value, the target engine output depending on the throttle opening.

Arrangement 9 will reduce a lift of the front wheel by applying the rear-wheel brake when there has been a throttle operation by the rider.

### (Arrangement 10)

An embodiment of the above-described invention further includes:
a rear-wheel brake operation condition determination unit configured to determine whether a rear-wheel brake pressure (BPr) resulting from a rider operation has been input if the front-wheel lift detection unit has detected a lift of the front wheel (more specifically, if the wheel velocity difference determination unit has determined that the vehicle velocity difference is equal to or more than the threshold (Vd≥Th2)),
wherein, if the rear-wheel brake operation condition determination unit determines that a rear-wheel brake pressure has been input, the target pressure-increase is newly set to a value obtained by subtracting the rear-wheel brake pressure (BPr) resulting from the rider operation from the target pressure-increase, and a command is issued to the brake pressure control device using the newly set target pressure-increase as a command value.

In Arrangement 10, if there is a rear-wheel brake operation by the rider, a target pressure-increase is set that is different from that set when there is no rear-wheel brake operation by the rider.

### (Arrangement 11)

Another front-wheel lift reduction device is a front-wheel lift reduction device, in a vehicle including a front wheel, a rear wheel, an engine for driving the rear wheel and a rear-wheel brake for applying braking power to the rear wheel, for reducing a lift of the front wheel, the device including:
a lift sign determination unit configured to determine whether there is a lift sign for the front wheel;
a heat estimation unit configured to estimate heat of the rear-wheel brake;
a target pressure-increase decision unit configured to decide on a target pressure-increase for the rear-wheel brake depending on the lift sign for the front wheel if the lift sign determination unit has determined that there is a lift sign for the front wheel and if a heat estimate obtained by the heat estimation unit is equal to or less than a threshold (Th1);
a brake pressure command unit configured to issue a command to a brake pressure control device using, as a command value, the target pressure-increase decided on by the target pressure-increase decision unit;
an engine output decision unit configured to set the target engine output depending on the lift sign for the front wheel if the lift sign determination unit has determined that there is a lift sign for the front wheel; and
an engine output command unit configured to issue a command to the engine control device using, as a command value, the target engine output decided on by the engine output decision unit.

In Arrangement 11, the front-wheel lift sign determination unit determines a lift sign for the front wheel. It is predicted in advance that the front wheel will be lifted and, before or directly after lift occurs, the rear-wheel brake application and engine torque-down are performed. Further, if the heat estimate obtained by the heat estimation unit exceeds the threshold (Th1), the rear-wheel brake is not applied, and the front-wheel lift is reduced by means of engine torque-down. When the heat of the rear-wheel brake exceeds a threshold as the rear-wheel brake mechanism heats up, the front-wheel lift reduction by means of the rear-wheel brake is not performed.

### (Arrangement 12)

According to an embodiment of the invention, the vehicle is a straddled vehicle.

### (Arrangement 13)

A vehicle according to another embodiment of the present invention is a vehicle including a front wheel and a rear wheel, the vehicle mounted with the front-wheel lift reduction device described above.

### BRIEF DESCRIPTION OF THE DRAWINGS

[FIG. 1] FIG. 1 is a schematic side view of a motorcycle.

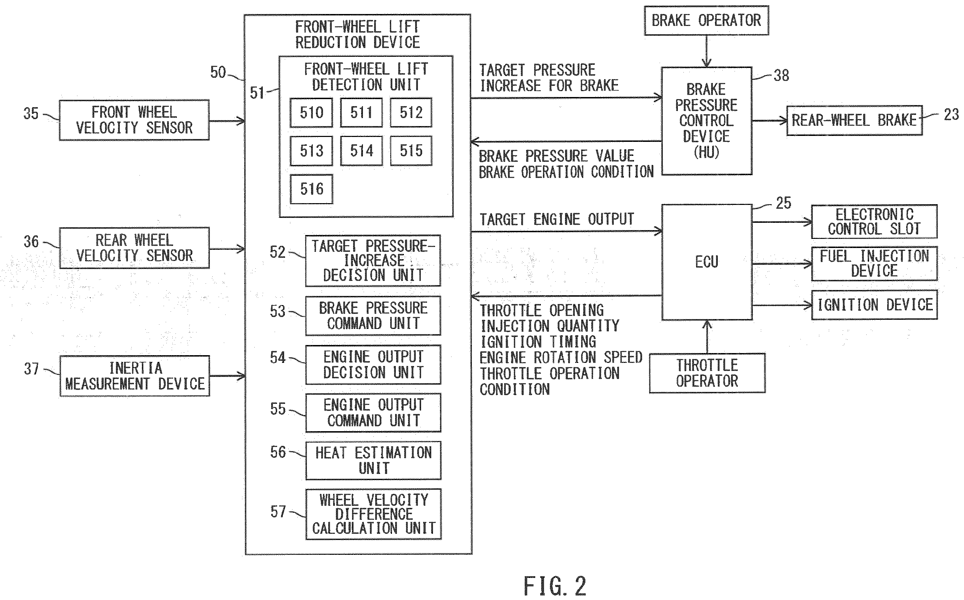

[FIG. 2] FIG. 2 is a functional block diagram according to Embodiment 1.
[FIG. 3] FIG. 3 is a control flow according to Embodiment 1.
[FIG. 4] FIG. 4 schematically shows an example of a series of operation states.
[FIG. 5] FIG. 5 is a functional block diagram according to Embodiment 2.
[FIG. 6] FIG. 6 is a control flow according to Embodiment 2.
[FIG. 7] FIG. 7 is a functional block diagram according to Embodiment 3.
[FIG. 8] FIG. 8 is a control flow according to Embodiment 3.

### EMBODIMENTS FOR CARRYING OUT THE INVENTION

### (Embodiment 1)

Embodiment 1 of the present invention will now be described with reference to the drawings. A motorcycle will be described as an example of the straddled vehicle according to Embodiment 1. In the following description, front/forward and rear(ward) and left and right refer to directions with respect to the direction in which the motorcycle advances.

### (Basic Configuration of Motorcycle)

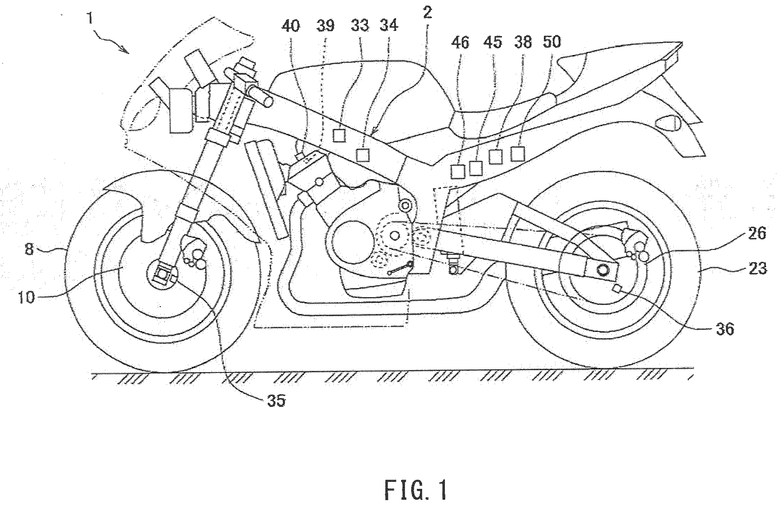

FIG. 1 is a schematic side view of a motorcycle mounted with the tire force control device of Embodiment 1. The motorcycle 1 includes a main frame 2. The main frame 2 is provided with an electronic control unit (ECU) 25 for controlling the operation of various parts of the motorcycle 1. Brake pressures on the front-wheel brake 10 and rear-wheel brake 26 are controlled by a brake pressure control device (hydraulic unit (HU)) 38 depending on the operations of the brake lever (brake operator) and brake pedal (brake operator). On the main frame 2 are also provided a longitudinal acceleration sensor 34, a vehicle-body velocity detection unit 45 and roll angle detection unit 46, and a front-wheel lift reduction device 50. The front wheel 8 is provided with a front wheel velocity sensor 35, while the rear wheel 23 is provided with a rear wheel velocity sensor 36. The main frame 2 is provided with an inertia measurement device (inertial measurement unit (IMU)) 33.

The vehicle-body velocity detection unit 45 calculates the vehicle-body velocity of the motorcycle 1 based on the longitudinal acceleration detected by the longitudinal acceleration sensor 34, the front wheel velocity detected by the front wheel velocity sensor 35 and the rear wheel velocity detected by the rear wheel velocity sensor 36. The roll angle detection unit 46 receives the roll rate of the motorcycle 1 from a gyro sensor or the inertia measurement device 33. The roll angle detection unit 46 detects the roll angle (lean angle θ) of the vehicle 1 based on these input values.

### (Front-Wheel Lift Reduction Device)

The front-wheel lift reduction device 50 has the function of reducing a lift of the front wheel 8 of the motorcycle 1 including the front and rear wheels 8 and 23. The front-wheel lift reduction device 50 includes a front-wheel lift detection unit 51 for detecting a lift of the front wheel 8 and at least applies a brake to the rear wheel 23 during a predetermined initial sub-period of the front-wheel lift period based on detection results from the front-wheel lift detection unit 51. The front-wheel lift reduction device 50 at least applies a brake to the rear wheel 23 during at least a sub-period of the lift period of the front wheel 8. The front-wheel lift reduction device 50 includes a target pressure-increase decision unit 52 for deciding on a target pressure-increase for the rear-wheel brake 26 and a brake pressure command unit 53 for issuing a command to the brake pressure control device 38, the command providing the target pressure-increase decided on by the target pressure-increase decision unit 52. The front-wheel lift reduction device 50 includes an engine output decision unit 54 for setting a target engine output based on detection results from the front-wheel lift detection unit 51 and an engine output command unit 55 for issuing a command to the ECU 25 (corresponding to an example of the engine control device of the present invention), the command providing the target engine output decided on by the engine output decision unit 53.

The target engine output may be, for example, target throttle opening value, target injection quantity value or target ignition timing value.

The front-wheel lift reduction device 50 includes a heat estimation unit 56 for estimating the heat of the rear-wheel brake 26. When the heat estimate obtained by the heat estimation unit 56 is equal to or less than a threshold (Th1), the target pressure-increase decision unit 52 may decide on a target pressure-increase and the brake pressure command unit 53 may issue a command to the brake pressure control device 38 using the target pressure-increase as a command value. The heat estimation unit 56 may perform the estimation based on the operation conditions of a temperature sensor such as a thermocouple or the rear-wheel brake.

The front-wheel lift detection unit 51 includes a wheel velocity difference determination unit 511 for determining whether or not the wheel velocity difference between the front wheel velocity (Vf) and the rear wheel velocity (Vr), (Vd=Vr-Vf), is equal to or more than a threshold (Th2), and a lift determination time determination unit 512 for determining whether or not the front-wheel lift determination time (CT) is equal to or less than a threshold (Th3) if the wheel velocity difference determination unit 511 has determined that the wheel velocity difference is equal to or more than a threshold (Vd≥Th2) in order to determine that it is in an initial sub-period of the front-wheel lift period.

If the lift determination time determination unit 512 has determined that the lift determination time is equal to or less than a threshold (CT≤Th3) and the heat estimate obtained by the heat estimation unit 56 is equal to or less than a threshold (Th1), the target pressure-increase decision unit 52 may decide on a target pressure-increase, which acts for at least an initial sub-period of the front-wheel lift period; the brake pressure command unit 53 may issue a command to the brake pressure control device 38 using, as a command value, the target pressure-increase acting for at least an initial sub-period of the front-wheel lift period; the engine output decision unit 54 may decide on a target engine output; and the engine output command unit 55 may issue a command to the engine control device (ECU 25) using the target engine output as a command value.

The front-wheel lift detection unit 51 includes a lift sign determination unit 513 for determining a lift sign for the front wheel. If the lift sign determination unit 513 determines that there is a lift sign for the front wheel and if the heat estimate obtained by the heat estimation unit 56 is equal to or less than a threshold (Th1), then, the target pressure-increase decision unit 52 may decide on a target pressure-increase depending on the lift sign for the front wheel; the brake pressure command unit 53 may issue a command to the brake pressure control device 38 using, as a command value, the target pressure-increase depending on the lift sign for the front wheel; the engine output decision unit 54 may set a target engine output depending on the lift sign for the front wheel; and the engine output command unit 55 may issue a command to the engine control device (ECU 25) using, as a command value, the target engine output depending on the lift sign for the front wheel. The front-wheel lift detection unit 51 may include a front-wheel lift sign estimation unit 514 for estimating the lift sign for the front wheel based on, for example, throttle opening, engine rotation number, or vehicle-body velocity.

The front-wheel lift detection unit 51 includes a lift velocity determination unit 515 for determining whether or not the front-wheel lift velocity (Vfw) is equal to or more than a threshold (Th4) if the lift determination time determination unit 512 has determined that the lift determination time is more than a threshold (CT≤Th3). If the lift velocity determination unit 515 has determined that the front-wheel lift velocity is equal to or more than a threshold (Vfw≥Th4) and the heat estimate obtained by the heat estimation unit 56 is equal to or less than a threshold (Th1), the target pressure-increase decision unit 52 may decide on a target pressure-increase depending on the front-wheel lift velocity, the brake pressure command unit 53 may issue a command to the brake pressure control device 38 using, as a command value, the target pressure-increase depending on the front-wheel lift velocity, the engine output decision unit 54 may decide on a target engine output depending on the front-wheel lift velocity, and the engine output command unit 55 may issue a command to the engine control device (ECU 25) using, as a command value, the target engine output depending on the front-wheel lift velocity. The front-wheel lift velocity (Vfw) may be calculated based on the amount of change in wheel velocity difference (ΔVd), or a value calculated by the inertia measurement device 33 may be received and used.

The front-wheel lift detection unit 51 includes a first lift angle determination unit 516 for determining whether or not the front-wheel lift angle (Afw) is equal to or more than a threshold (Th5) if the lift velocity determination unit 515 has determined that the front-wheel lift velocity is less than a threshold (Vfw≥Th4). If the first lift angle determination unit 516 has determined that the front-wheel lift angle is equal to or more than a threshold (Afw≥Th5) and if the heat estimate obtained by the heat estimation unit 56 is equal to or less than a threshold (Th1), then, the target pressure-increase decision unit 52 may decide on a target pressure-increase depending on the front-wheel lift angle, the brake pressure command unit 53 may issue a command to the brake pressure control device 38 using, as a command value, the target pressure-increase depending on the front-wheel lift angle, the engine output decision unit 54 may set a target engine output depending on the front-wheel lift angle, and the engine output command unit 55 may issue a command to the engine control device (ECU 25) using, as a command value, the target engine output depending on the front-wheel lift angle. The front-wheel lift angle (Afw) may receive a value calculated by the inertia measurement device 33 and use it, for example.

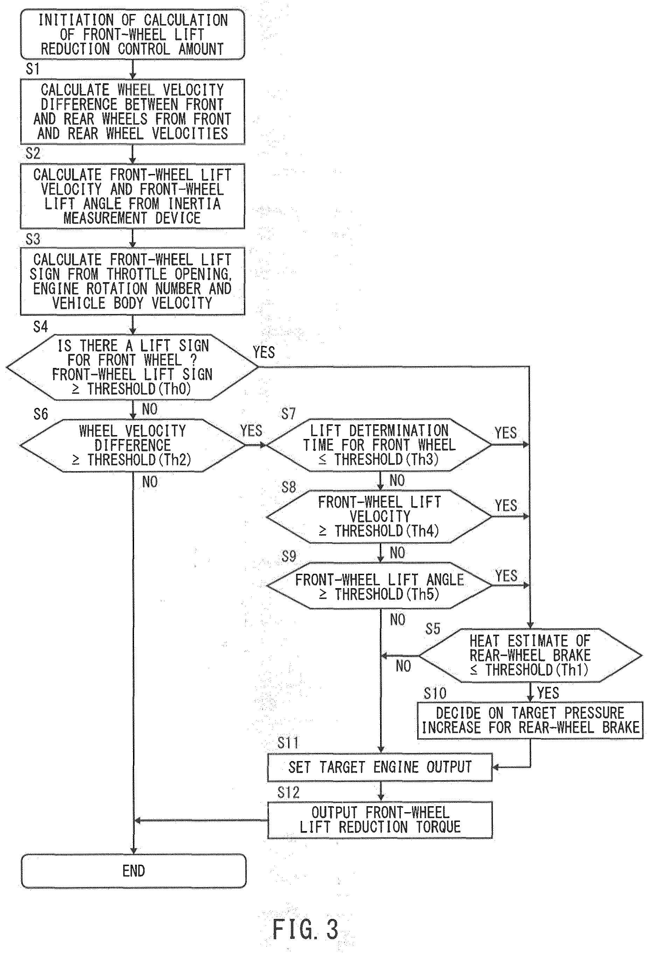

The calculation of the front-wheel lift reduction control quantity (torque) of Embodiment 1 will be described with reference to the flow chart of FIG. 3. The order of steps from S1 to S3 is not limited to that of FIG. 3: the order may be changed or the steps may be performed in a parallel manner.

The front wheel velocity sensor 35 calculates the front wheel velocity. The rear wheel velocity sensor 36 calculates the rear wheel velocity. The wheel velocity difference calculation unit 57 calculates the wheel velocity difference from the front and rear wheel velocities (step S1).

The front-wheel lift velocity/lift angle calculation unit 510 calculates the front-wheel lift velocity and the front-wheel lift angle based on data obtained by the inertia measurement device 33 (step S2).

The front-wheel lift sign estimation unit 511 calculates the front-wheel lift sign from the throttle opening, engine rotation number, and vehicle-body velocity (step S3). The throttle opening and engine rotation number are obtained by the ECU 25. The vehicle-body velocity is calculated by the vehicle-body velocity detection unit 45.

The lift sign determination unit 512 makes a determination about the lift sign for the front wheel calculated by the front-wheel lift sign estimation unit 511 (step S4). More specifically, the lift sign determination unit 512 determines whether or not the front-wheel lift sign is equal to or more than a threshold (front-wheel lift sign ≥ threshold (Th0)). If the front-wheel lift sign ≥ threshold (Th0), step S5 is performed; otherwise, step S6 is performed.

At step S5, the heat estimation unit 56 calculates the heat of the rear-wheel brake, i.e. heat estimate. The heat estimation unit 56 estimates the heat of the rear-wheel brake (heat estimate) from the operation conditions of a temperature sensor, such as a thermocouple, or the rear-wheel brake (for example, brake pressure value or brake operation condition). The timing of the calculation of the heat estimate is not limited to step S5: the heat estimate may be calculated directly before step S5 or at any desired time point. Then, the heat estimation unit determines whether or not the heat estimate of the rear-wheel brake that has been estimated is equal to or less than a threshold (heat estimate ≤ threshold (Th1)) (step S5). If the heat estimate of the rear-wheel brake ≤ threshold (Th1), then, step S10 is performed; otherwise, step S11 is performed.

If the heat estimate of the rear-wheel brake is equal to or less than a threshold (Th1), at step S10, the target pressure-increase decision unit 52 decides on a target pressure-increase for the rear-wheel brake to apply braking power to the rear wheel for at least an initial sub-period of the front-wheel lift period (step S10). Subsequently, step S11 is performed.

At step S11, the engine output decision unit 54 sets a target engine output (step S11). Subsequently, step S12 is performed. The target engine output is calculated based on detection results from the front-wheel lift detection unit 51 and the current engine output conditions (for example, throttle opening, injection quantity, ignition period, engine rotation number, or throttle operation conditions).

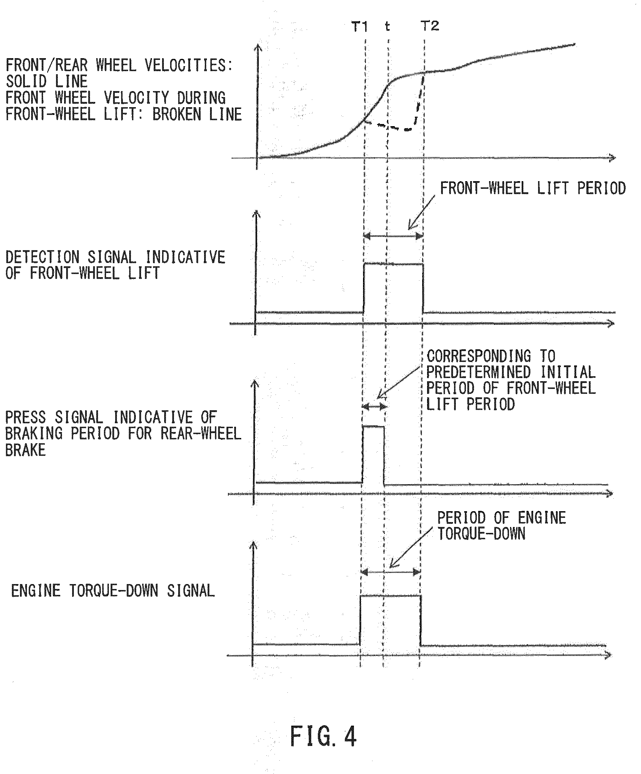

At Step S12, the engine output decision unit 54 outputs the front-wheel lift reduction torque (step S12). More specifically, the engine output command unit 55 issues a command to the ECU 25 using, as a command value, the target engine output decided on by the engine output decision unit 54. The brake pressure command unit 53 issues a command to the brake pressure command device 38 using, as a command value, the target pressure-increase decided on by the target pressure-increase decision unit 52. The target pressure-increase and target engine output for the rear-wheel brake will be described with reference to the graphs of FIG. 4. In the topmost graph of FIG. 4, the horizontal axis represents time and the vertical axis represents the wheel velocity of each wheel. The wheel velocities of the front and rear wheels change in an identical or substantially identical manner; at a certain time point, Ti, when the wheel velocity of the front wheel becomes significantly lower than that of the rear wheel, it is determined that there is a lift of the front wheel, as discussed above. When there is a front-wheel lift, the target pressure-increase (braking power) is applied to the rear-wheel brake for at least an initial sub-period (T1 to t) of the front-wheel lift period. Then, the target engine output (in this case, engine torque-down) is applied during the front-wheel lift periods T1 to T2. As the rear-wheel brake is applied for at least an initial sub-period of the front-wheel lift period and engine torque-down acts during the front-wheel lift period, the front-wheel lift of the vehicle may be suitably reduced.

Step S6 will be described. The wheel velocity difference determination unit 513 determines whether the wheel velocity difference calculated by the wheel velocity difference calculation unit 57 ≥ threshold (Th2) (step S6). If it is determined that the wheel velocity difference is equal to or more than a threshold (Vd≥Th2), step S7 is performed; otherwise, the calculation of the front-wheel lift reduction control quantity (torque) is finished.

At step S7, to determine whether it is in an initial sub-period of the front-wheel lift period, the lift determination time determination unit 514 determines whether or not the front-wheel lift determination time (CT) is equal to or less than a threshold (Th3) (front-wheel lift determination time ≤ threshold (Th3)) (step S7). If it is determined that the front-wheel lift determination time is equal to or less than a threshold (CT≤Th3), step S5 is performed; otherwise, step S8 is performed.

If it is determined that the front-wheel lift determination time is more than a threshold (CT≤Th3), at step S8, the lift velocity determination unit 515 determines whether or not the front-wheel lift velocity (Vfw) is equal to or more than a threshold (Th4) (front-wheel lift velocity ≥ threshold (Th4)) (step S8). If it is determined that the front-wheel lift velocity is equal to or more than a threshold (Vfw≥Th4), step S5 is performed; otherwise, step S9 is performed.

If it is determined that the front-wheel lift velocity is less than a threshold (Vfw≥Th5), at step S9, the lift angle determination unit 516 determines whether or not the front-wheel lift angle (Afw) is equal to or more than a threshold (Th5) (front-wheel lift angle ≥ threshold (Th5) (step S9). If it is determined that the front-wheel lift angle is equal to or more than a threshold (Afw ≥ Th5), step S5 is performed; otherwise, step S11 is performed.

### (Embodiment 2)

While Embodiment 1 includes an inertia measurement device 33, Embodiment 2 includes no inertia measurement device 33. Since the elements with the same characters as in Embodiment 1 have the same functions, these elements will not be described at all or only in a simplified manner in the following description.

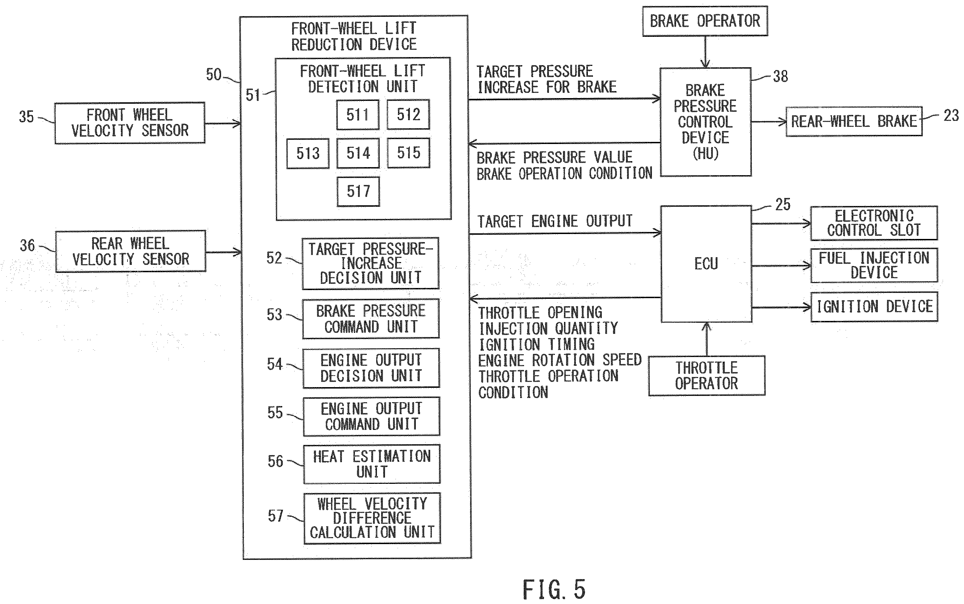

Embodiment 2 is an arrangement that does not include an inertia measurement device 33, a front-wheel lift velocity/lift angle calculation unit 510 or a lift angle determination unit 516, as shown in the functional block diagram of FIG. 5. The front-wheel lift velocity calculation unit 517 calculates the front-wheel lift velocity based on the amount of change in wheel velocity difference (ΔVd).

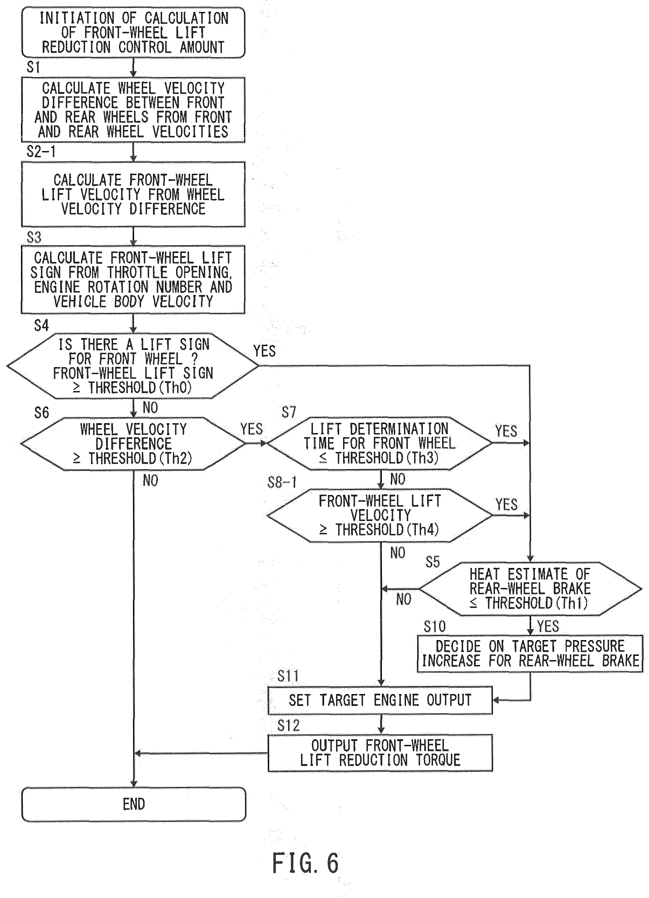

Further, as shown in the flow chart of FIG. 6, step S2 may be replaced by step S2-1, where the front-wheel lift velocity estimation unit 517 calculates the front-wheel lift velocity based on the amount of change in wheel velocity difference (ΔVd).

Step S9 is omitted; step S8 is replaced by step S8-1, where it is determined whether or not the front-wheel lift velocity is equal to or more than a threshold (Vfw≥Th4); if so, step S5 is performed, and otherwise step S11 is performed.

### (Embodiment 3)

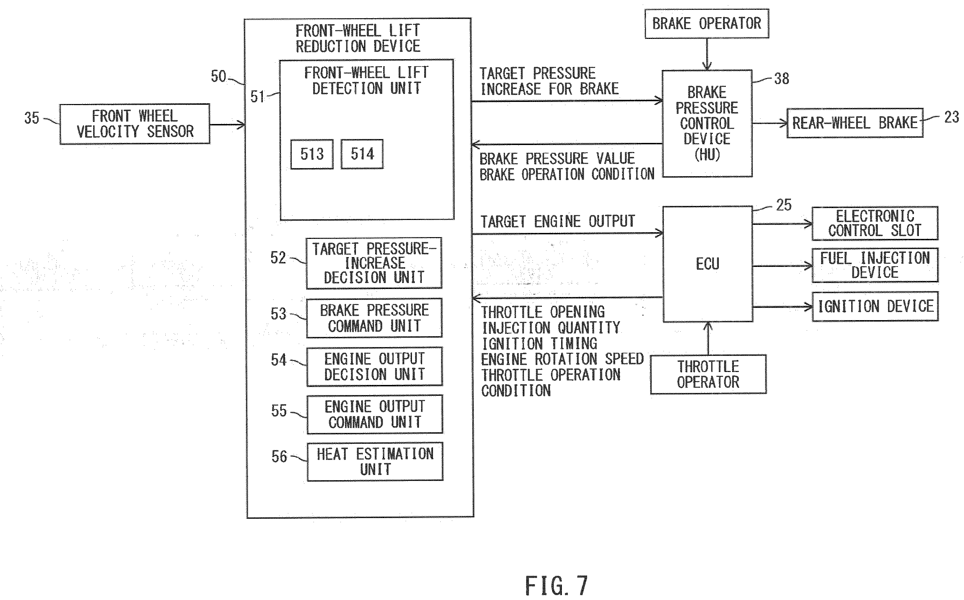

The main feature of Embodiment 3 is the front-wheel lift sign determination for predicting a lift of the front wheel in advance. Since the elements with the same characters as in Embodiment 1 have the same functions, these elements will not be described at all or only in a simplified manner in the following description. Embodiment 3 is an arrangement including only one of the front wheel velocity sensor and rear wheel velocity sensor. The functional block diagram of FIG. 7 shows an arrangement only including the front wheel velocity sensor 35. Further, the arrangement does not include a front-wheel lift velocity/lift angle calculation unit 510, a wheel velocity difference determination unit 511, a lift determination time determination unit 512, a lift velocity determination unit 515, a lift angle determination unit 516, and a wheel velocity difference calculation unit 57.

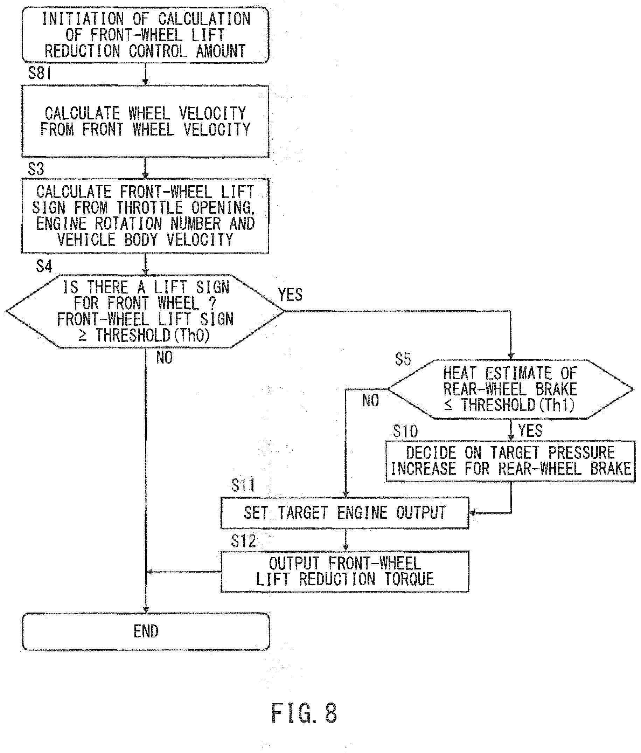

As shown in the flow chart of FIG. 8, Embodiment 3 does not include steps S1, S2, S6, S7 and S8. At step S81, the vehicle-body velocity detection unit 45 calculates the vehicle-body velocity based on the front wheel velocity obtained by the front wheel velocity sensor 35 and the longitudinal acceleration detected by the longitudinal acceleration sensor 34. Step s81 is followed by step S3.

### (Embodiment 4)

Embodiment 4 is a variation of Embodiment 1 where steps S8 and S9 are swapped in order. Another embodiment may be a variation of Embodiment 1 or 2 where step S4 is omitted and step S3 is followed by step S6.

### (Embodiment 5)

Embodiment 5 is a variation of Embodiment 1 where rider operation condition (throttle opening) is added to the determination conditions. The arrangement is as follows: it further includes a throttle opening determination unit for determining whether or not the throttle opening (SO) resulting from a rider operation is equal to or more than a threshold (Th6) if the front-wheel lift detection unit has detected a lift of the front wheel (more specifically, the wheel velocity difference determination unit has determined that the wheel velocity difference is equal to or more than a threshold (Vd≥Th2)). If the throttle opening determination unit determines that the throttle opening is equal to or more than a threshold (SO≥Th6), the target pressure-increase decision unit decides on a target pressure-increase depending on the throttle opening, the brake pressure command unit issues a command to the brake pressure control device 38 using, as a command value, the target pressure-increase depending on the throttle opening, the engine output decision unit sets a target engine output depending on the throttle opening, and the engine output command unit issues a command to the engine control device (ECU 25) using, as a command value, the target engine output depending on the throttle opening.

### (Embodiment 6)

Embodiment 6 is a variation of Embodiment 1 where rider operation condition (rear-wheel brake pressure) is added to the determination conditions. The arrangement is as follows: it further includes a rear-wheel brake operation condition determination unit for determining whether a rear-wheel brake pressure (BPr) resulting from a rider operation has been input if the front-wheel lift detection unit has detected a lift of the front wheel (more specifically, the wheel velocity difference determination unit has determined that the wheel velocity difference is equal to or more than a threshold (Vd≥Th2). If the rear-wheel brake operation condition determination unit determines that a rear-wheel brake pressure has been input, the target pressure-increase is newly set to a value obtained by subtracting the rear-wheel brake pressure (BPr) resulting from the rider operation from the target pressure-increase, and the newly set target pressure-increase is issued to the brake pressure control device 38 as a command.

### EXPLANATION OF CHARACTERS

- 1: motorcycle
- 23: rear-wheel brake
- 25: ECU
- 33: inertia measurement device (IMU)
- 38: brake pressure control device (HU)
- 45: vehicle-body velocity detection unit
- 50: front-wheel lift reduction device
- 51: front-wheel lift detection unit
- 52: target pressure-increase decision unit
- 53: brake pressure command unit
- 54: engine output command unit
- 56: heat estimation unit
- 57: wheel velocity difference calculation unit

## Claims

1. A front-wheel lift reduction device, in a vehicle including a front wheel, a rear wheel, an engine for driving the rear wheel and a rear-wheel brake for applying braking power to the rear wheel, for reducing a lift of the front wheel, the device comprising:
a front-wheel lift detection unit configured to detect a lift of the front wheel;
a target pressure-increase decision unit configured to decide on a target pressure-increase based on a detection result from the front-wheel lift detection unit to apply braking power to the rear wheel for at least partly an initial sub-period of a front-wheel lift period during which the lift of the front wheel is detected, the target pressure-increase serving as a target for the rear-wheel brake;
a brake pressure command unit configured to issue a command to a brake pressure control device using, as a command value, the target pressure-increase decided on by the target pressure-increase decision unit;
an engine output decision unit configured to set a target engine output based on the detection result from the front-wheel lift detection unit, the target engine output serving as a target for an output of the engine; and
an engine output command unit configured to issue a command to an engine control device using, as a command value, the target engine output decided on by the engine output decision unit.

2. The front-wheel lift reduction device according to claim 1, further comprising:
a heat estimation unit configured to estimate heat of the rear-wheel brake,
wherein, if a heat estimate of the rear-wheel brake estimated by the heat estimation unit is equal to or less than a threshold, the target pressure-increase decision unit decides on the target pressure-increase, and the brake pressure command unit issues a command to the brake pressure control device using the decided-on target pressure-increase as a command value.

3. The front-wheel lift reduction device according to claim 2,
wherein the front-wheel lift detection unit includes:
a wheel velocity difference determination unit configured to determine whether or not a wheel velocity difference between a front wheel velocity and a rear wheel velocity is equal to or more than a threshold; and
a lift determination time determination unit configured, if the wheel velocity difference determination unit has determined that the wheel velocity difference is equal to or more than the threshold, to determine whether or not a lift determination time during which the lift of the front wheel is detected is equal to or less than a threshold to determine the initial sub-period of the front-wheel lift period,
wherein, if the lift determination time determination unit determines that the lift determination time is equal to or less than the threshold and if the heat estimate obtained by the heat estimation unit is equal to or less than the threshold, then, the target pressure-increase decision unit decides on the target pressure-increase acting during at least partly the initial sub-period of the front-wheel lift period, and the brake pressure command unit issues a command to the brake pressure control device using, as a command value, the target pressure-increase acting during at least partly the initial sub-period of the front-wheel lift period, and
the engine output decision unit sets the target engine output, and the engine output command unit issues a command to the engine control device using the target engine output as a command value.

4. The front-wheel lift reduction device according to claim 2,
wherein the front-wheel lift detection unit includes:
a lift sign determination unit configured to determine whether there is a lift sign for the front wheel,
wherein, if the lift sign determination unit determines that there is the lift sign for the front wheel and if the heat estimate obtained by the heat estimation unit is equal to or less than the threshold, then, the target pressure-increase decision unit decides on the target pressure-increase depending on the lift sign for the front wheel, and the brake pressure command unit issues a command to the brake pressure control device using, as a command value, the target pressure-increase depending on the lift sign for the front wheel,
the engine output decision unit sets the target engine output depending on the lift sign for the front wheel, and the engine output command unit issues a command to the engine control device using, as a command value, the target engine output depending on the lift sign for the front wheel.

5. The front-wheel lift reduction device according to claim 3,
wherein the front-wheel lift detection unit includes:
a lift velocity determination unit configured to determine whether or not a front-wheel lift velocity is equal to or more than a threshold if the lift determination time determination unit has determined that the lift determination time is more than the threshold,
wherein, if the lift velocity determination unit determines that the front-wheel lift velocity is equal to or more than the threshold and if the heat estimate obtained by the heat estimation unit is equal to or less than the threshold, then, the target pressure-increase decision unit decides on the target pressure-increase depending on the front-wheel lift velocity, and the brake pressure command unit issues a command to the brake pressure control device using, as a command value, the target pressure-increase depending on the front-wheel lift velocity, and
the engine output decision unit sets the target engine output depending on the front-wheel lift velocity, and the engine output command unit issues a command to the engine control device using, as a command value, the target engine output depending on the front-wheel lift velocity.

6. The front-wheel lift reduction device according to claim 5,
wherein the front-wheel lift detection unit includes:
a first lift angle determination unit configured to determine whether or not a front-wheel lift angle is equal to or more than a threshold if the lift velocity determination unit has determined that the front-wheel lift velocity is less than the threshold,
wherein, if the first lift angle determination unit determines that the front-wheel lift angle is equal to or more than the threshold and the heat estimate obtained by the heat estimation unit is equal to or less than the threshold, then, the target pressure-increase decision unit decides on the target pressure-increase depending on the front-wheel lift angle, and the brake pressure command unit issues a command to the brake pressure control device using, as a command value, the target pressure-increase depending on the front-wheel lift angle, and
the engine output decision unit sets the target engine output depending on the front-wheel lift angle, and the engine output command unit issues a command to the engine control device using, as a command value, the target engine output depending on the front-wheel lift angle.

7. The front-wheel lift reduction device according to claim 3,
wherein the front-wheel lift detection unit includes:
a second lift angle determination unit configured to determine whether or not the front-wheel lift angle is equal to or more than a threshold if the lift determination time determination unit has determined that the lift determination time is more than the threshold,
wherein, if the second lift angle determination unit determines that the front-wheel lift angle is equal to or more than the threshold and if the heat estimate obtained by the heat estimation unit is equal to or less than the threshold, then, the target pressure-increase decision unit decides on the target pressure-increase depending on the front-wheel lift angle, and the brake pressure command unit issues a command to the brake pressure control device using, as a command value, the target pressure-increase depending on the front-wheel lift angle, and
the engine output decision unit sets the target engine output depending on the front-wheel lift angle, and the engine output command unit issues a command to the engine control device using, as a command value, the target engine output depending on the front-wheel lift angle.

8. The front-wheel lift reduction device according to claim 7,
wherein the front-wheel lift detection unit includes:
a second lift velocity determination unit configured to determine whether or not the front-wheel lift velocity is equal to or more than a threshold if the second lift angle determination unit has determined that the front-wheel lift angle is less than the threshold,
wherein, if the second lift velocity determination unit determines that the front-wheel lift velocity is equal to or more than the threshold and if the heat estimate obtained by the heat estimation unit is equal to or less than the threshold, then, the target pressure-increase decision unit decides on the target pressure-increase depending on the front-wheel lift velocity, and the brake pressure command unit issues a command to the brake pressure control device using, as a command value, the target pressure-increase depending on the front-wheel lift velocity, and
the engine output decision unit sets the target engine output depending on the front-wheel lift velocity, and the engine output command unit issues a command to the engine control device using, as a command value, the target engine output depending on the front-wheel lift velocity.

9. The front-wheel lift reduction device according to any one of claims 1 to 8, further comprising:
a throttle opening determination unit configured to determine whether or not a throttle opening resulting from a rider operation is equal to or more than a threshold if the front-wheel lift detection unit has detected the lift of the front wheel,
wherein, if the throttle opening determination unit determines that the throttle opening is equal to or more than the threshold, the target pressure-increase decision unit decides on the target pressure-increase depending on the throttle opening, and the brake pressure command unit issues a command to the brake pressure control device using, as a command value, the target pressure-increase depending on the throttle opening, and
the engine output decision unit sets the target engine output depending on the throttle opening, and the engine output command unit issues a command to the engine control device using, as a command value, the target engine output depending on the throttle opening.

10. The front-wheel lift reduction device according to any one of claims 1 to 9, further comprising:
a rear-wheel brake operation condition determination unit configured to determine whether or not a rear-wheel brake pressure resulting from a rider operation has been input if the front-wheel lift detection unit has detected the lift of the front wheel,
wherein, if the rear-wheel brake operation condition determination unit determines that the rear-wheel brake pressure has been input, the target pressure-increase is newly set to a value obtained by subtracting the rear-wheel brake pressure resulting from the rider operation from the target pressure-increase, and a command is issued to the brake pressure control device using the newly set target pressure-increase as a command value.

11. A front-wheel lift reduction device, in a vehicle including a front wheel, a rear wheel, an engine for driving the rear wheel and a rear-wheel brake for applying braking power to the rear wheel, for reducing a lift of the front wheel, the device comprising:
a lift sign determination unit configured to determine whether there is a lift sign for the front wheel;
a heat estimation unit configured to estimate heat of the rear-wheel brake;
a target pressure-increase decision unit configured to decide on a target pressure-increase for the rear-wheel brake depending on the lift sign for the front wheel if the lift sign determination unit has determined that there is a lift sign for the front wheel and if a heat estimate obtained by the heat estimation unit is equal to or less than a threshold;
a brake pressure command unit configured to issue a command to a brake pressure control device using, as a command value, the target pressure-increase decided on by the target pressure-increase decision unit;
an engine output decision unit configured to set the target engine output depending on the lift sign for the front wheel if the lift sign determination unit has determined that there is a lift sign for the front wheel; and
an engine output command unit configured to issue a command to the engine control device using, as a command value, the target engine output decided on by the engine output decision unit.

12. The front-wheel lift reduction device according to any one of claims 1 to 11, wherein the vehicle is a straddled vehicle.

13. A vehicle including a front wheel and a rear wheel, the vehicle mounted with the front-wheel lift reduction device according to any one of claims 1 to 12.
